# EUROPÄISCHE PATENTSCHRIFT

(11) **EP 2 056 990 B1**
(45) Veröffentlichungstag und Bekanntmachung des Hinweises auf die Patenterteilung: **03.10.2012**
(21) Anmeldenummer: 07803036.8
(22) Anmeldetag: 29.08.2007
(51) Int. Cl.: B23K 26/42, B23K 26/14, B23K 26/04

(54) **VERFAHREN UND VORRICHTUNG ZUR BEARBEITUNG VON WERKSTÜCKEN UNTER VERWENDUNG EINES LASERSTRAHLS**
METHOD AND DEVICE FOR PROCESSING WORKPIECES WITH THE HELP OF A LASER BEAM
PROCÉDÉ ET DISPOSITIF D'USINAGE DE PIÈCES À USINER AU MOYEN D'UN RAYON LASER

(30) Priorität: 30.08.2006 DE 102006040515; 19.06.2007 DE 102007028570
(43) Veröffentlichungstag der Anmeldung: 13.05.2009
(73) Patentinhaber: ThyssenKrupp Steel Europe AG, 47166 Duisburg (DE)
(72) Erfinder: DORNSCHEIDT, Christian, 40629 Düsseldorf (DE); KOCH, Martin, 47506 Neukirchen-Vluyn (DE); PLHA, Jens, 40468 Düsseldorf (DE); WISCHMANN, Stefan, 10437 Berlin (DE); MIESSEN, Matthias, 52249 Eschweiler (DE); NEUMANN, Günter, 52066 Aachen (DE); OTT, Lars, 52353 Düren (DE); SCHÄFER, Ansgar, 52074 Aachen (DE)
(74) Vertreter: Cohausz & Florack
(86) Internationale Anmeldenummer: PCT/EP2007/059021
(87) Internationale Veröffentlichungsnummer: WO 2008/025811

(56) Entgegenhaltungen:
- EP-A- 1 643 284
- WO-A-94/03302
- DE-A1- 3 800 555
- DE-A1- 4 129 278
- DE-A1-102004 007 178
- DE-U1- 9 218 664
- US-A- 4 391 275
- US-A- 5 237 148
- US-A1- 2005 184 036

## Beschreibung

Die Erfindung betrifft eine Vorrichtung zur Bearbeitung von Werkstücken unter Verwendung eines Laserstrahls mit Mitteln zur Führung des Laserstrahls, wobei die Mittel zur Führung des Laserstrahls eine Fokussieroptik und mindestens ein feststehendes Mittel zur Umlenkung des Laserstrahls aufweisen, wobei die Fokussieroptik mindestens ein verschiebbares optisches Abbildungselement zur Fokussierung des Laserstrahls aufweist, die Fokussieroptik (4) ein verschiebbares optisches Abbildungselement (6) zur Fokussierung des Laserstrahls (2) aufweist, und wobei die Fokussieroptik (4) mindestens ein weiteres optisches Abbildungselement (7, 8) aufweist, welches vor dem verschiebbaren optischen Abbildungselement (6) oder als letztes Abbildungselement im Strahlengang (2) angeordnet ist. Weiter betrifft die Erfindung ein Verfahren zur Bearbeitung von Werkstücken unter Verwendung eines Laserstrahls, wobei der Laserstrahl durch Führungsmittel geführt und auf das zu bearbeitende Werkstück umgelenkt wird, wobei die Führungsmittel eine Fokussieroptik mit mindestens einem Abbildungselement und mindestens einem Mittel zur Umlenkung des Laserstrahls aufweisen, wobei während des Bearbeitungsvorgangs der Arbeitsabstand zwischen den Führungsmitteln und dem Werkstück durch relative Verschiebung eines optischen Abbildungselements der Fokussieroptik eingestellt wird und bei dem der Laserstrahl auf der Oberfläche des Werkstücks positioniert wird, wobei eine Arbeitsebene angesteuert wird, in welcher der Durchmesser des Laserstrahls eine gleichbleibende Intensitätsverteilung aufweist.

Vorrichtungen zur Bearbeitung von Werkstücken unter Verwendung eines Laserstrahls werden im Wesentlichen zum Schweißen und zum Schneiden von insbesondere metallischen Werkstoffen eingesetzt. Insbesondere in der Automobilindustrie hat speziell das Laserstrahlschweißen von Feinblechen eine große Bedeutung erlangt, wobei immer höhere Anforderungen in Bezug auf die Qualität und die Wirtschaftlichkeit der Verfahren gestellt werden. Zur Herstellung von Schweißverbindungen mittels eines Laserstrahls ist unter anderem das konventionelle Schweißen und das Remote-Schweißen bekannt. Beim konventionellen Schweißen ist die Vorrichtung zum Schweißen sehr nah an dem Werkstück positioniert und die gesamte Vorrichtung wird von einem Schweißpunkt zum nächsten Schweißpunkt bewegt, was zwar zu einer hohen Positioniergenauigkeit des Laserstrahls aber gleichzeitig zu hohen Nebenzeiten führt. Beim Remote-Schweißen beträgt die Entfernung zwischen Lichtquelle und dem zu bearbeitenden Werkstück hingegen bis zu einem Meter. Der Laserstrahl wird dabei mittels eines beweglichen Spiegels auf die zu bearbeitende Nahtstelle gelenkt. Innerhalb von Millisekunden kann der Umlenkspiegel den Laserstrahl auf den nächsten zu schweißenden Punkt lenken, wodurch der Aktionsraum des Schweißwerkzeugs vergrößert wird, ohne dass die gesamte Vorrichtung von Schweißpunkt zu Schweißpunkt bewegt werden muss. Besonders bei komplizierten Formen mit vielen Schweißstellen wird dieses Verfahren eingesetzt. Nachteilig bei diesem Verfahren ist jedoch die geringe Absolutgenauigkeit der Positionierung des Laserstrahls und die eingeschränkte Zugänglichkeit des Werkstücks. Daher wird das Remote-Schweißen üblicherweise nur für ein eng begrenztes Bauteilspektrum eingesetzt.

Eine Vorrichtung der oben genannten Art ist beispielsweise aus der deutschen Offenlegungsschrift DE 10 2004 007 178 A1 bekannt. Hierbei wird ein Laserstrahl zunächst durch ein Kollimatorobjektiv geführt, dass den Laserstrahl kollimiert. Durch ein dahinter angeordnetes zerstreuendes Abbildungselement wird das Parallellichtbündel vom Kollimatorobjektiv in ein divergentes Laserstrahlbündel umgewandelt und auf einen, um eine Drehachse drehbar gelagerten, abbildenden Spiegel geführt, von wo aus der Laserstrahl auf die Oberfläche des Werkstückes gelenkt wird. Der abbildende Spiegel ist dabei gemeinsam mit dem zerstreuenden Abbildungselement in Richtung des vom Kollimatorobjektiv ausgehenden parallelen Lichtstrahlbündels linear verschiebbar, wobei der Abstand zwischen Kollimatorobjektiv und Laserstrahleinlass sowie der Abstand zwischen dem zerstreuenden Abbildungselement und dem abbildenden Spiegel konstant gehalten wird. Bei dem Verfahren wird somit eine schwenkende Bewegung des Arbeitsfokus auf der Oberfläche des Werkstücks, die durch Drehen des abbildenden Spiegels erreicht wird, mit einer linearen Abtastbewegung kombiniert, die durch eine Verschiebung des abbildenden Spiegels gemeinsam mit dem zerstreuenden Abbildungselement entlang des parallelen Laserlichtbündels erfolgt. Mit dieser Vorrichtung ist es nicht möglich, den Arbeitsabstand, d.h. den Abstand zwischen dem abbildenden Spiegel und dem Arbeitsfokus, zu verändern, was dazu führt, dass mit der bekannten Vorrichtung ausschließlich eine 2D oder eine 2,5D Bearbeitung ebener Flächen möglich ist. Dadurch, dass der Arbeitsabstand gleich bleibt, verändert sich bei einer Verschiebung des Arbeitsfokus durch Drehen des Spiegels auch die Intensitätsverteilung im Arbeitsfokus, was zu einer ungleichmäßigen Bearbeitung der Werkstückoberfläche führt.

Ferner ist aus der deutschen Offenlegungsschrift DE 41 29 278 A1 eine Vorrichtung zur Bearbeitung von Werkstücken mit Hilfe eines Laserstrahls bekannt, bei der der Laserstrahl eine von einer Linsenhalterung getragene Fokussierungsoptik, bestehend aus einer Linse oder einem Linsensystem, durchläuft, wobei durch Verschieben der Linsenhalterung und damit der Fokussierungsoptik der Laserstrahl in Laserstrahlrichtung positionierbar ist. Auch bei dieser Vorrichtung ist lediglich eine 2D bzw. 2,5D Bearbeitung der Werkstücke möglich, sodass mit dieser Vorrichtung ausschließlich ebene Werkstücke mit unterschiedlichen Höhen bearbeitet werden können. Veränderungen der horizontalen Position des Arbeitsfokus sind mit dieser Vorrichtung sehr aufwendig, da dafür die gesamte Vorrichtung bewegt werden muss, was zu unerwünscht hohen Nebenzeiten führt und das Verfahren zur Herstellung der Schweißnaht sehr unflexibel macht.

Aus der US-amerikanischen Patentanmeldung US 5/237/148 A ist eine Vorrichtung zum Bearbeiten von Werkstücken unter Verwendung eines Laserstrahls mit den Merkmalen des Oberbegriffs des Patentanspruches 1 sowie ein Verfahren zum Bearbeiten von Werkstücken mit den Merkmalen des Oberbegriffs des Patentanspruches 10 bekannt.

Ausgehend von dem zuvor erläuterten Stand der Technik liegt der Erfindung daher die Aufgabe zugrunde, eine Vorrichtung und ein Verfahren zur Bearbeitung von Werkstücken unter Verwendung eines Laserstrahls zur Verfügung zu stellen, welche bzw. welches eine qualitativ hochwertige 3D-Bearbeitung eines Werkstückes bei gleichzeitig kurzen Nebenzeiten, eine hohe Positioniergenauigkeit des Laserstrahls während des Bearbeitungsvorganges ermöglicht und gleichzeitig eine hohe Dynamik bei der Positionierung des Laserstrahls gewährleistet.

Gemäß einer ersten Lehre der Erfindung ist die zuvor hergeleitete und aufgezeigte Aufgabe durch eine Vorrichtung zur Bearbeitung von Werkstücken unter Verwendung eines Laserstrahls dadurch gelöst, dass das Übersetzungsverhältnis zwischen Verstellweg des optischen Abbildungselements und der Höhe des Arbeitsabstandes maximal 1:30, bevorzugt maximal 1:50 beträgt. Durch den relativ geringen Verstellweg des optischen Abbildungselementes wird eine hohe Dynamik bei der Positionierung des Laserstrahls während des Bearbeitungsvorganges gewährleistet, ohne dass es zu unerwünscht hohen Nebenzeiten kommt.

Die Fokussieroptik der erfindungsgemäßen Vorrichtung weist mindestens ein weiteres optisches Abbildungselement auf, welches vor dem verschiebbaren optischen Abbildungselement oder als letztes Abbildungselement im Strahlengang angeordnet ist. Dadurch, dass eine Brennweitenänderung durch Verschieben des optischen Abbildungselementes erfolgt, ist es möglich, den Arbeitsabstand, d.h. den vertikalen Abstand zwischen den Führungsmitteln und dem Werkstück, während des Bearbeitungsvorganges in Abhängigkeit von der Form des zu bearbeitenden Werkstückes schnell und einfach einzustellen bzw. nachzuführen. Das Verschieben des Abbildungselementes erfolgt dabei vorzugsweise linear zum Strahlengang des aus der Strahlungsquelle austretenden Laserstrahls.

Sind die Mittel zur Führung des Laserstrahls über Bewegungsachsen, vorzugsweise in drei Raumrichtungen und drei Orientierungsrichtungen, Bewegungen ermöglichend angeordnet, kann erreicht werden, dass eine Arbeitsebene in der gewünschten Position auf der Oberfläche des zu bearbeitenden Werkstückes eingestellt werden kann, wodurch ein breiter, sehr flexibel einstellbarer Arbeitsbereich zur Verfügung steht. Dadurch ist eine 3D-Bearbeitung der Werkstücke möglich, so dass nicht nur ebene Flächen sondern auch räumliche Konturen schnell und mit einer hohen Genauigkeit und hohen Qualität bearbeitet werden können. Ein großer Vorteil bei dem Verfahren ist es zudem, dass insbesondere durch eine gezielte Veränderung der Brennweite unabhängig von der zu bearbeiteten Kontur eine gleichbleibende Intensitätsverteilung in der Arbeitsebene erreicht wird, die nicht der Ebene entspricht, in welcher der Fokus eingestellt wird, da zumeist die Brennweite nicht dem Arbeitsabstand entspricht. Die Bearbeitungsverhältnisse werden von dem Arbeitsabstand entkoppelt und auf diese Weise ein arbeitsabstandsvariierendes 3D-Laserstrahlschweißverfahren realisiert.

Gemäß einer weiteren vorteilhaften Ausgestaltung der Erfindung werden die Bewegungsachsen durch ein Handlingsystem, vorzugsweise durch eine Roboterapplikation zur Verfügung gestellt. Dadurch, dass die Mittel zur Führung des Laserstrahls selbst bewegt werden, ist die gewünschte Position der Arbeitsebene sehr variabel und genau einstellbar. Die Anzahl der Freiheitsgrade wird durch die Bewegung der Fokussieroptik erhöht. Die Verwendung einer Roboterapplikation ermöglicht zudem eine schnelle und einfache Bewegung der Fokussieroptik.

Diese erfindungsgemäße Vorrichtung kann sowohl zum Schneiden als auch zum Schweißen von Werkstücken, insbesondere von metallischen Werkstücken, angewendet werden. Vorzugsweise wird die erfindungsgemäße Vorrichtung zum Verschweißen von Blechen oder Halbzeugen aus Stahl und/oder Stahllegierungen eingesetzt. Die Form der miteinander zu verschweißenden Bleche oder Halbzeuge kann flach oder räumlich geartet sein.

Wird die erfindungsgemäße Vorrichtung zum Schweißen eingesetzt, ermöglicht sie eine einfache Kombination des Remote-Schweißverfahrens mit dem konventionellen Schweißverfahren, wobei während des Bearbeitungsvorganges zwischen diesen beiden Schweißverfahren umgeschaltet werden kann. Dadurch werden die Vorteile dieser beiden Schweißverfahren, insbesondere die kurzen Nebenzeiten und die hohe Positioniergenauigkeit, miteinander vereint, sodass mit der erfindungsgemäßen Vorrichtung bis zu 30 % der sonst notwendigen Bearbeitungszeit eingespart werden kann. Die mittels der erfindungsgemäßen Vorrichtung hergestellten Bearbeitungsnähte weisen eine hohe Genauigkeit und eine hohe Qualität auf.

In einer vorteilhaften Ausgestaltung der Erfindung ist das optische Abbildungselement stufenlos verschiebbar angeordnet. Durch die stufenlose Verschiebung des optischen Abbildungselementes wird eine fließende Einstellung des Arbeitsabstandes in Abhängigkeit der zu bearbeitenden Konturen des Werkstückes ermöglicht, sodass nicht nur ebene sondern auch räumliche Konturen leicht und mit einer hohen Flexibilität bearbeitet werden können. Die Änderungen des Arbeitsabstandes erfolgen dadurch stetig und hochdynamisch, sodass die Einstellung des Arbeitsabstandes auf das Werkstück bezogen taktzeitoptimiert erfolgen kann, d.h. ohne schnelle Bewegung der Hauptachsen einer Führungsmaschine.

Eine weitere vorteilhafte Ausführungsform der Erfindung besteht darin, dass das Mittel zur Umlenkung des Laserstrahls aus einem Spiegel, vorzugsweise aus einem dielektrischen Spiegel, besteht. Ferner werden bei der Verwendung von Spiegeln Dispersionseffekte, wie sie bei transmissiven Optiken auftreten, ausgeschlossen. Die Verwendung von dielektrischen Spiegeln hat zudem den Vorteil, dass eine besonders hohe Reflektionsrate des Laserstrahls erreicht wird.

Ferner besteht eine weitere vorteilhafte Ausgestaltung der Erfindung darin, dass der Spiegel planar ausgebildet ist. Aufgrund dessen, dass beim Auftreffen des Laserstrahls auf einen planaren Spiegel gilt, dass der Einfallswinkel gleich dem Ausfallswinkel ist, ist die Justierung der Arbeitsebene bei der Verwendung eines planaren Spiegels leicht durchzuführen. Gegenüber Spiegeln mit einer gekrümmten Oberfläche haben planare Spiegel den Vorteil, dass bei der Reflexion des Laserstrahls eine wesentlich geringere Fehlerrate auftritt. Zudem sind planare Spiegel kostengünstig in der Herstellung.

Dadurch, dass gemäß einer weiteren vorteilhaften Ausgestaltung der Erfindung der Verstellweg des optischen Abbildungselementes maximal 20 mm beträgt, kann beispielsweise ein Arbeitsabstand von beispielsweise 200 bis 800 mm abgedeckt werden, so dass Höhenunterschiede eines Werkstückes von beispielsweise bis zu 600 mm bearbeitet werden können.

Gemäß einer weiteren vorteilhaften Ausführungsform der Erfindung ist das optische Abbildungselement mit Hilfe von Einstellmitteln, vorzugsweise mit Hilfe von elektromotorischen Einstellmitteln, verfahrbar. Als Einstellmittel wird dabei vorzugsweise ein Linearmotor verwendet, der ohne großen Aufwand stufenlos ansteuerbar ist, sodass der Bereich des Arbeitsabstandes fließend und flexibel eingestellt werden kann.

Eine weitere vorteilhafte Ausgestaltung der Erfindung besteht darin, dass das optische Abbildungselement als konkave oder konvexe Linse ausgebildet ist. Linsen haben den Vorteil, dass sie aufgrund ihrer geringen Masse relativ dynamisch bewegbar, insbesondere schnell zu beschleunigen, sind.

Vorteilhafterweise weist die erfindungsgemäße Vorrichtung gemäß einer weiteren Ausgestaltung der Erfindung ein Schutzglas auf. Dieses Schutzglas kann sowohl hinter dem Mittel zur Umlenkung als auch innerhalb der Fokussieroptik hinter dem verschiebbaren optischen Abbildungselement angeordnet sein. Das Schutzglas hat dabei die Aufgabe, die empfindliche Fokussieroptik bzw. das Mittel zur Umlenkung vor Schmutz zu schützen.

Gemäß einer weiteren vorteilhaften Ausgestaltung der Erfindung weist die Vorrichtung ein Sensorsystem, insbesondere ein optisches Sensorsystem, auf. Das Sensorsystem hat dabei die Aufgabe, den Arbeitsabstand, also den vertikalen Abstand zwischen den Führungsmitteln, insbesondere dem Mittel zur Umlenkung des Laserstrahls, und der Oberfläche des zu bearbeitenden Werkstückes, zu ermitteln. Vorzugsweise erfolgt die Abstandsmessung mittels optisch arbeitender Sensoren, die den Vorteil haben, dass die Messung berührungslos erfolgt, sodass die Messung während des Bearbeitungsvorganges stattfinden kann und der Bearbeitungsvorgang durch das Messen nicht beeinträchtigt wird.

Nach einer weiteren vorteilhaften Ausführungsform der Erfindung weist die Vorrichtung eine Lichtleitfaser auf. Mit Hilfe der Lichtleitfaser wird der Laserstrahl in die Fokussieroptik eingekoppelt.

Gemäß einer zweiten Lehre der Erfindung wird die oben hergeleitete und aufgezeigte Aufgabe für ein gattungsgemäßes Verfahren zur Bearbeitung von Werkstücken unter Verwendung eines Laserstrahls dadurch gelöst, dass ein Übersetzungsverhältnis zwischen dem Verstellweg des optischen Abbildungselementes und der Höhe des Arbeitsabstandes von max. 1:50 verwendet wird.
Wird der Laserstrahl auf der Oberfläche des Werkstücks positioniert, wobei eine Arbeitsebene angesteuert wird, in welcher der Durchmesser des Laserstrahls eine gleichbleibende Intensitätsverteilung im Vergleich zu anderen Arbeitsabständen aufweist, können durch die Verwendung des erfindungsgemäßen Übersetzungsverhältnisses eine hohe Dynamik unter Vermeidung unerwünschter Nebenzeiten realisiert werden. Durch diese Maßnahme wird eine optimale Schweißnahtausbildung trotz variablem Arbeitsabstand während des Laserstrahlschweißens erreicht.

Insbesondere unter Verwendung der erfindungsgemäßen Vorrichtung sind zusätzlich hohe Verarbeitungsgeschwindigkeiten möglich.
Durch die erfindungsgemäße Kombination der Einstellung des Arbeitsabstandes bei gleichzeitiger Einstellung der Position des Laserstrahls auf der Oberfläche des Werkstückes ist es möglich, nicht nur ebene sondern auch räumliche Konturen dreidimensional zu bearbeiten, wobei während des gesamten Bearbeitungsvorganges unabhängig von der Kontur des zu bearbeitenden Werkstücks eine gleichbleibende Intensitätsverteilung in der Arbeitsebene sicher gestellt wird, d.h. es wird nicht im Fokus der Laserstrahlen geschweißt. Mit dem erfindungsgemäßen Verfahren kann somit schnell und einfach eine qualitativ hochwertige Bearbeitungsnaht hergestellt werden.

Zur Erzielung einer gleichbleibenden Intensitätsverteilung in der Arbeitsebene ist eine Kennlinie, beispielsweise in einem Steuerprogramm hinterlegt, mit welcher die Brennweite eingestellt werden kann.

Nach einer vorteilhaften Ausgestaltung der Erfindung wird zur Erzeugung des Laserstrahls ein Faserlaser oder Festkörperlaser verwendet. Vorzugsweise wird als Festkörperlaser ein Nd:YAG-Laser verwendet, bei dem der Laserstrahl über eine Lichtleitfaser in die Fokussieroptik geführt wird. Festkörperlaser haben den Vorteil, dass sie kompakt und leicht zu handhaben sind. Allerdings sind auch andere Laserquellen, wie beispielsweise CO₂-Laser, verwendbar.

Es gibt nun eine Vielzahl von Möglichkeiten, die erfindungsgemäße Vorrichtung und das erfindungsgemäße Verfahren zur Bearbeitung von Werkstücken unter Verwendung eines Laserstrahls auszugestalten und weiterzubilden. Hierzu wird beispielsweise verwiesen einerseits auf die den Patentansprüchen 1 und 10 nachgeordneten Patentansprüchen und andererseits auf die Beschreibung eines Ausführungsbeispiels in Verbindung mit der Zeichnung. Die Zeichnung zeigt in
- Fig. 1: eine perspektivische Ansicht eines Ausführungsbeispiels der erfindungsgemäßen Vorrichtung während des Schweißens eines Werkstücks,
- Fig. 2: in einer perspektivischen Ansicht den Aufbau eines zweiten Ausführungsbeispiels einer erfindungsgemäßen Fokussieroptik und
- Fig. 3a) bis c): in schematischer Ansicht den Strahlengang dreier Ausführungsbeispiele einer erfindungsgemäßen Vorrichtung zur Bearbeitung von Werkstücken.

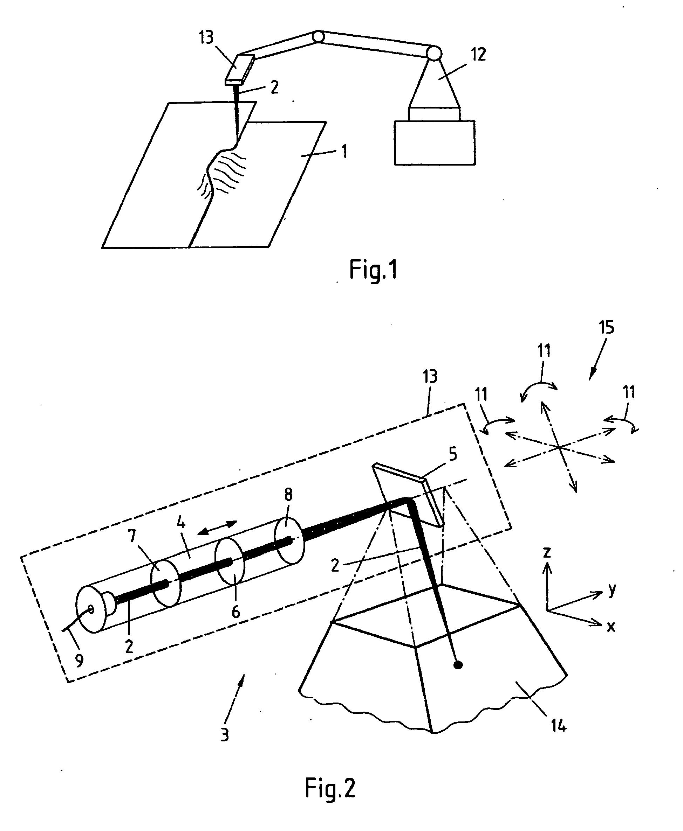

Fig. 1 zeigt eine perspektivische Ansicht eines zu bearbeitenden Werkstückes 1, wobei mit Hilfe eines Ausführungsbeispiels der erfindungsgemäßen Vorrichtung eine Bearbeitungsnaht mit einer räumlichen Kontur hergestellt wird. Die in Fig. 2 näher dargestellten Führungsmittel der Laserstrahlen, umfassend die Fokussieroptik 4 und feststehende Mittel zur Umlenkung der Laserstrahlen 5 sind im Bearbeitungskopf 13 angeordnet und werden mittels eines Handlingsystems 12, vorzugsweise einer Roboterapplikation, geführt.

In Fig. 2 ist ein schematischer Aufbau eines Ausführungsbeispiels einer erfindungsgemäßen Vorrichtung zur Bearbeitung von Werkstücken 1 unter Verwendung eines' Laserstrahls 2 mit Mitteln zur Führung des Laserstrahls 3, mit einer Fokussieroptik 4 und mit einem Mittel zur Umlenkung des Laserstrahls 5 auf die Oberfläche des zu bearbeitenden Werkstückes 1 dargestellt. Die Fokussieroptik 4 weist ein optisches Abbildungselement 6, indem in Fig. 1 gezeigten Ausführungsbeispiel eine Konvexlinse, auf, welches innerhalb der Fokussieroptik 4 stufenlos verschiebbar ist, wodurch der Abstand zwischen dem optischen Abbildungselement 6 und dem Mittel zur Umlenkung 5 eingestellt werden kann. Die Verschiebung des optischen Abbildungselementes 6 wird mit Hilfe von, hier nicht dargestellten, Einstellmitteln, vorzugsweise elektromotorischen Einstellmitteln, beispielsweise einem Linearmotor, realisiert. Mit Hilfe des optischen Abbildungselementes 6 wird die Brennweite des Laserstrahls 2 eingestellt.

Durch die Verschiebung des optischen Abbildungselementes 6 ist es möglich, den Arbeitsabstand, also den Abstand zwischen den Führungsmitteln 3 und der Oberfläche des Werkstücks 1 entlang der z-Achse, einzustellen. Dadurch wird erreicht, dass unabhängig von der Höhe der zu bearbeitenden Arbeitsebene auf der Oberfläche des Werkstücks, eine gleich hohe Intensität des Laserstrahls 1 in dem Schweißpunkt erzielt wird, sodass mit der erfindungsgemäßen Vorrichtung eine qualitativ hochwertige Bearbeitungsnaht hergestellt werden kann. Der Verstellweg des verschiebbaren optischen Abbildungselementes 6 beträgt beispielsweise maximal 20 mm, sodass in einem Bereich des Arbeitsabstandes von 200 bis 800 mm gearbeitet werden kann.

Vor dem verschiebbaren optischen Abbildungselement 6 ist ein weiteres optisches Abbildungselement 7 in Form einer Linse angeordnet. Hinter dem verschiebbaren optischen Abbildungselement 6 ist ein weiteres optisches Abbildungselement 8 angeordnet. Der Laserstrahl 2 wird über eine Lichtleitfaser 9 in die Fokussieroptik 4 eingekoppelt.

Nach dem Austritt des Laserstrahls 2 aus der Fokussieroptik 4 trifft der Laserstrahl 2 auf das Mittel zur Umlenkung 5, welche vorzugsweise, wie in Fig. 2 dargestellt, aus einem planaren Spiegel besteht. Um eine genaue Positionierung des Laserstrahls 2 auf dem Werkstück 1 zu gewährleisten, ist das Mittel zur Umlenkung 5 feststehend angeordnet und gemeinsam mit der Fokussieroptik 4 in einem schematisch dargestellten Bearbeitungskopf 13 im Raum durch die in Fig. 2 dargestellten Bewegungsachsen 15 und Orientierungsrichtungen 11 bewegbar. Der Arbeitsraum 14 wird nur durch die kombinierte Bewegung des Bearbeitungskopfes 13 aufgespannt.

Mit Hilfe der erfindungsgemäßen Vorrichtung ist es möglich, sowohl den Arbeitsabstand über die Verschiebung des optischen Abbildungselementes 6 als auch die Position des auftreffenden Laserstrahls 2 auf dem Werkstück 1 mit Hilfe des Bearbeitungskopfes 13 während des Bearbeitungsvorganges optimal einzustellen, so dass eine qualitativ hochwertige Bearbeitungsnaht hergestellt werden kann.

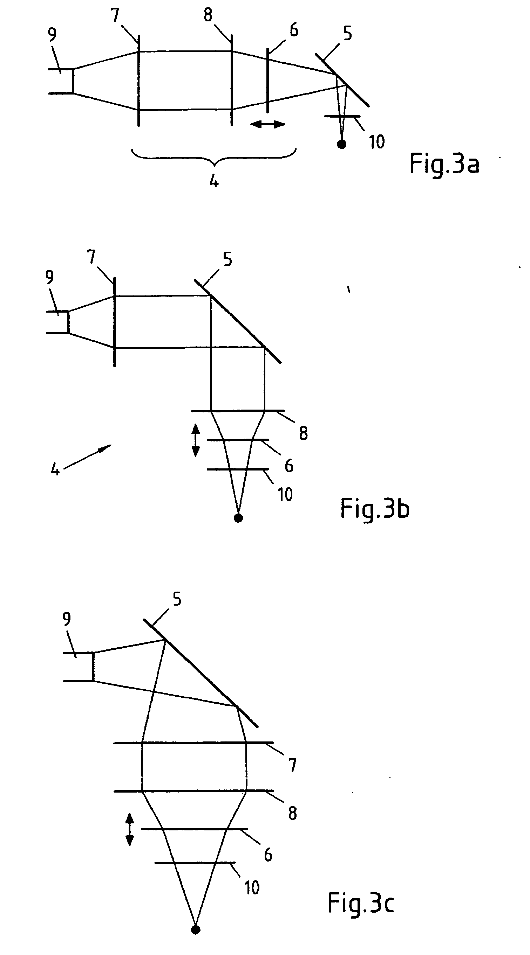

In Fig. 3a bis 3c sind weitere mögliche Ausführungsformen der Fokussieroptik 4 in Kombination mit einem Mittel zur Umlenkung des Laserstrahls schematisch dargestellt. Fig. 3a zeigt beispielsweise die Fokussieroptik 4 eines Ausführungsbeispiel der erfindungsgemäßen Vorrichtung, bei welcher das verschiebbare optische Abbildungselement 6 in Laserstrahlrichtung hinter zwei optischen Abbildungselementen 7, 8 angeordnet ist. Ferner ist ein Schutzglas 10 vorgesehen, welches das Eindringen von Schmutz in die empfindliche Fokussieroptik 4 verhindert.

In Fig. 3b ist das bewegliche optische Abbildungselement 6 ebenfalls in Strahlrichtung hinter zwei optischen Abbildungselementen aber auch hinter den Mitteln 5 zur Umlenkung des Laserstrahls 2 angeordnet. Die optischen Abbildungselemente 7, 8 sind vor und hinter den Umlenkmitteln 5 angeordnet. In einer weiteren Variante sind in Fig. 3c das verschiebbare optische Abbildungselement gemeinsam mit den weiteren optischen Abbildungselementen 7, 8 in Strahlrichtung hinter den Umlenkmittel 5 positioniert. Über die dargestellten Varianten kann beispielsweise der zur Verfügung stehende Bauraum in einem Bearbeitungskopf 13 optimal ausgenutzt werden. Als Umlenkmittel 5 kann natürlich auch eine Mehrzahl an Spiegel verwendet werden.

Die erfindungsgemäße Vorrichtung bzw. das erfindungsgemäße Verfahren kann sowohl zum Schneiden als auch zum Schweißen von vorzugsweise metallischen Werkstücken eingesetzt werden. Beim Schweißen, insbesondere beim Laserstrahlschweißen, werden mit der erfindungsgemäßen Vorrichtung alle Vorteile des konventionellen Schweißens mit den Vorteilen des Remote-Schweißens kombiniert.

## Patentansprüche

1. Vorrichtung zur Bearbeitung von Werkstücken (1) unter Verwendung eines Laserstrahls (2) mit Mitteln zur Führung des Laserstrahls (3), wobei die Mittel zur Führung des Laserstrahls eine Fokussieroptik (4) und mindestens ein feststehendes Mittel zur Umlenkung des Laserstrahls (5) aufweisen, wobei die Fokussieroptik (4) ein verschiebbares optisches Abbildungselement (6) zur Fokussierung des Laserstrahls (2) aufweist, und wobei die Fokussieroptik (4) mindestens ein weiteres optisches Abbildungselement (7, 8) aufweist, welches vor dem verschiebbaren optischen Abbildungselement (6) oder als letztes Abbildungselement im Strahlengang (2) angeordnet ist,
**dadurch gekennzeichnet, dass** das Übersetzungsverhältnis zwischen dem Verstellweg des optischen Abbildungselementes und der Höhe des Arbeitsabstandes max. 1:30 beträgt.

2. Vorrichtung nach Anspruch 1,
**dadurch gekennzeichnet, dass** die Mittel zur Führung des Laserstrahls (3) über Bewegungsachsen (15), vorzugsweise in drei Raumrichtungen und drei Orientierungsrichtungen (11), Bewegungen ermöglichend angeordnet sind.

3. Vorrichtung nach Anspruch 1 oder 2,
**dadurch gekennzeichnet, dass** die Bewegungsachsen (15) durch ein Handlingsystem, vorzugsweise durch eine Roboterapplikation (12) zur Verfügung gestellt werden.

4. Vorrichtung nach einem der Ansprüche 1 bis 3,
**dadurch gekennzeichnet, dass** das Mittel zur Umlenkung des Laserstrahls (5) aus einem Spiegel, vorzugsweise aus einem dielektrischen Spiegel, besteht.

5. Vorrichtung nach einem der Ansprüche 1 bis 4,
**dadurch gekennzeichnet, dass** der Verstellweg des optischen Abbildungselementes (6) maximal 20 mm beträgt.

6. Vorrichtung nach einem der Ansprüche 1 bis 5,
**dadurch gekennzeichnet, dass** das Übersetzungsverhältnis des Verstellweges des optischen Abbildungselementes und der Höhe des Arbeitsabstandes max. 1:50 beträgt.

7. Vorrichtung nach einem der Ansprüche 1 bis 6,
**dadurch gekennzeichnet, dass** das optische Abbildungselement (6) mit Hilfe von Einstellmitteln, vorzugsweise mit Hilfe von elektromotorischen Einstellmitteln, verfahrbar ist.

8. Vorrichtung nach einem der Ansprüche 1 bis 7,
**dadurch gekennzeichnet, dass** ein Schutzglas (10) vorgesehen ist.

9. Vorrichtung nach einem der Ansprüche 1 bis 8,
**dadurch gekennzeichnet, dass** ein Sensorsystem, insbesondere ein optisches Sensorsystem, vorgesehen ist.

10. Verfahren zur Bearbeitung von Werkstücken unter Verwendung eines Laserstrahls, wobei der Laserstrahl durch Führungsmittel geführt und auf das zu bearbeitende Werkstück umgelenkt wird, wobei die Führungsmittel eine Fokussieroptik mit mindestens einem Abbildungselement und mindestens einem Mittel zur Umlenkung des Laserstrahls aufweisen, insbesondere unter Verwendung einer Vorrichtung nach einem der Ansprüche 1 bis 9, wobei während des Bearbeitungsvorgangs der Arbeitsabstand zwischen den Führungsmitteln und dem Werkstück durch relative Verschiebung eines optischen Abbildungselements der Fokussieroptik eingestellt wird, bei dem der Laserstrahl auf der Oberfläche des Werkstücks positioniert wird, wobei eine Arbeitsebene angesteuert wird, in welcher der Durchmesser des Laserstrahls eine gleichbleibende Intensitätsverteilung aufweist,
**dadurch gekennzeichnet, dass** ein Übersetzungsverhältnis zwischen dem Verstellweg des optischen Abbildungselementes und der Höhe des Arbeitsabstandes von max. 1:30 verwendet wird.

11. Verfahren nach Anspruch 10,
**dadurch gekennzeichnet, dass** die Brennweite unter Verwendung des verschiebbaren Abbildungselementes stufenlos eingestellt wird.

12. Verfahren nach einem der Ansprüche 10 oder 11,
**dadurch gekennzeichnet, dass** das verschiebbare Abbildungselement mit Hilfe von Einstellmitteln, insbesondere von elektromotorischen Einstellmitteln, verfahren wird.

13. Verfahren nach einem der Ansprüche 10 bis 12,
**dadurch gekennzeichnet, dass** der Arbeitsabstand unter Verwendung eines Sensorsystems, insbesondere unter Verwendung eines optischen Sensorsystems, ermittelt wird.

14. Verfahren nach einem der Ansprüche 10 bis 13,
**dadurch gekennzeichnet, dass** die Fokussieroptik unter Verwendung eines Handlingsystems, vorzugsweise unter Verwendung einer Roboterapplikation, bewegt wird.

15. Verfahren nach einem der Ansprüche 10 bis 14,
**dadurch gekennzeichnet, dass** zur Erzeugung des Laserstrahls ein Festkörperlaser oder Faserlaser verwendet wird.

## Claims

1. Device for machining workpieces (1) using a laser beam (2), having means for guiding the laser beam (3), wherein the means for guiding the laser beam comprise a focussing optics (4) and at least one stationary means for deflecting the laser beam (5), wherein the focussing optics (4) comprises a displaceable optical imaging element (6) for focussing the laser beam (2), and wherein the focussing optics (4) comprises at least one further optical imaging element (7, 8) which is arranged in front of the displaceable optical imaging element (6) or as the last imaging element in the beam path (2),
**characterized in that**
the translation ratio between the adjustment path of the optical imaging element and the height of the working distance is maximally 1:30.

2. The device according to Claim 1,
**characterized in that**
the means for guiding the laser beam (3) are arranged along axes of motion (15), preferably facilitating motion in three spatial directions and three orientation directions (11).

3. The device according to Claim 1 or 2,
**characterized in that**
the axes of motion (15) are provided by means of a handling system, preferably a robot application (12).

4. The device according to any one of Claims 1 to 3,
**characterized in that**
the means for deflecting the laser beam (5) consists of a mirror, preferably a dielectric mirror.

5. The device according to any one of Claims 1 to 4,
**characterized in that**
the length of the adjustment path of the optical imaging element (6) is maximally 20 mm.

6. The device according to any one of Claims 1 to 5,
**characterized in that**
the translation ratio of the adjustment path of the optical imaging element and the height of the working distance is maximally 1:50.

7. The device according to any one of Claims 1 to 6,
**characterized in that**
the optical imaging element (6) can be moved using adjustment means, preferably using electric-motorised adjustment means.

8. The device according to any one of Claims 1 to 7,
**characterized in that**
a protective glass (10) is provided.

9. The device according to any one of Claims 1 to 8,
**characterized in that**
a sensor system, in particular an optical sensor system, is provided.

10. Method for machining workpieces using a laser beam, wherein the laser beam is guided by guiding means and deflected onto the workpiece to be processed, wherein the guiding means comprise a focussing optics having at least one imaging element and at least one means for deflecting the laser beam, in particular using a device according to any one of Claims 1 to 9, wherein during the machining process the working distance between the guiding means and the workpiece is adjusted by relative displacement of an optical imaging element of the focussing optics, in which the laser beam is positioned on the surface of the workpiece, wherein a working plane is controlled, in which the diameter of the laser beam has a constant intensity distribution,
**characterized in that**
a translation ratio between the adjustment path of the optical imaging element and the height of the working distance of maximally 1:30 is used.

11. The method according to Claim 10,
**characterized in that**
the focal length is smoothly adjusted using the displaceable imaging element.

12. The method according to one of Claims 10 or 11,
**characterized in that**
the displaceable imaging element is moved using adjustment means, preferably electric-motorised adjustment means.

13. The method according to any one of Claims 10 to 12,
**characterized in that**
the working distance is determined using a sensor system, in particular using an optical sensor system.

14. The method according to any one of Claims 10 to 13,
**characterized in that**
the focussing optics is moved using a handling system, preferably using a robot application.

15. The method according to any one of Claims 10 to 14,
**characterized in that**
in order to generate the laser beam, a solid-state laser or fibre laser is used.

## Revendications

1. Dispositif pour l'usinage de pièces (1) avec l'utilisation d'un faisceau laser (2) avec des moyens pour le guidage du faisceau laser (3), les moyens pour le guidage du faisceau laser présentant une optique de focalisation (4) et au moins un moyen fixe pour la déviation du faisceau laser (5), l'optique de focalisation (4) présentant un élément de reproduction (6) optique coulissant pour la focalisation du faisceau laser (2), et l'optique de focalisation (4) présentant au moins un autre élément de reproduction (7, 8) optique, lequel est disposé en amont de l'élément de reproduction (6) optique coulissant ou sous forme de dernier élément de reproduction dans la trajectoire du faisceau (2),
**caractérisé en ce que**
le rapport entre la course de réglage de l'élément de reproduction optique et la hauteur de la distance de travail est au maximum de 1/30.

2. Dispositif selon la revendication 1,
**caractérisé en ce que**
les moyens pour le guidage du faisceau laser (3) sont disposés en permettant des déplacements au moyen d'axes de déplacement (15), de préférence dans trois directions de l'espace et trois directions d'orientation (11).

3. Dispositif selon la revendication 1 ou 2,
**caractérisé en ce que**
les axes de déplacement (15) sont mis à disposition par un système de manipulation, de préférence par une application de robot (12).

4. Dispositif selon l'une des revendications 1 à 3,
**caractérisé en ce que**
le moyen pour la déviation du faisceau laser (5) comprend un miroir, de préférence un miroir diélectrique.

5. Dispositif selon l'une des revendications 1 à 4,
**caractérisé en ce que**
la course de réglage de l'élément de reproduction optique (6) est au maximum de 20 mm.

6. Dispositif selon l'une des revendications 1 à 5,
**caractérisé en ce que**
le rapport entre la course de réglage de l'élément de reproduction optique et la hauteur de la distance de travail est au maximum de 1/50.

7. Dispositif selon l'une des revendications 1 à 6,
**caractérisé en ce que**
l'élément de reproduction (6) optique peut être déplacé à l'aide de moyens de réglage, de préférence à l'aide de moyens de réglage à moteur électrique.

8. Dispositif selon l'une des revendications 1 à 7,
**caractérisé en ce**
**qu'**un verre de protection (10) est prévu.

9. Dispositif selon l'une des revendications 1 à 8,
**caractérisé en ce**
**qu'**un système capteur, en particulier un système capteur optique, est prévu.

10. Procédé pour l'usinage de pièces avec l'utilisation d'un faisceau laser, le faisceau laser étant guidé par des moyens de guidage et étant dévié sur la pièce à usiner, les moyens de guidage présentant une optique de focalisation doté d'au moins un élément de reproduction et d'au moins un moyen pour la déviation du faisceau laser, en particulier avec l'utilisation d'un dispositif selon l'une des revendications 1 à 9, la distance de travail entre les moyens de guidage et la pièce étant réglée pendant l'opération d'usinage par déplacement relatif d'un élément de reproduction optique de l'optique de focalisation, dans lequel le faisceau laser est positionné sur la surface de la pièce, en sachant qu'on actionne un plan de travail dans lequel le diamètre du faisceau laser présente une répartition d'intensité uniforme,
**caractérisé en ce**
**qu'**un rapport entre la course de réglage de l'élément de reproduction optique et la hauteur de la distance de travail de maximum 1/30 est utilisé.

11. Procédé selon la revendication 10,
**caractérisé en ce que**
la focale est réglée de façon progressive en utilisant l'élément de reproduction coulissant.

12. Procédé selon l'une des revendications 10 ou 11,
**caractérisé en ce que**
l'élément de reproduction coulissant est déplacé à l'aide de moyens de réglage, en particulier de moyens de réglage à moteur électrique.

13. Procédé selon l'une des revendications 10 à 12,
**caractérisé en ce que**
la distance de travail est déterminée en utilisant un système capteur, en particulier en utilisant un système capteur optique.

14. Procédé selon l'une des revendications 10 à 13,
**caractérisé en ce que**
l'optique de focalisation est déplacée en utilisant un système de manipulation, de préférence en utilisant une application de robot.

15. Procédé selon l'une des revendications 10 à 14,
**caractérisé en ce**
**qu'**un laser solide ou un laser à fibre est utilisé pour générer le faisceau laser.
